Europäisches Patentamt

European Patent Office

Office européen des brevets

(11) Veröffentlichungsnummer: **0 469 608 A2**

# EUROPÄISCHE PATENTANMELDUNG

(21) Anmeldenummer: **91112954.2**

(51) Int. Cl.⁵: **G01F 23/28**

(22) Anmeldetag: **01.08.91**

(30) Priorität: **02.08.90 DE 9011348 U**

(43) Veröffentlichungstag der Anmeldung:
**05.02.92 Patentblatt 92/06**

(84) Benannte Vertragsstaaten:
**AT BE CH DE DK ES FR GB GR IT LI LU NL SE**

(71) Anmelder: **Bosch-Siemens Hausgeräte GmbH
Patent- und Vertragswesen
Hochstrasse 17 Postfach 10 02 50
W-8000 München 80(DE)**

Anmelder: **THE COCA-COLA COMPANY
P.O. Drawer 1734
Atlanta, GA 30301(US)**

(72) Erfinder: **Gatter, Raimond, Dipl.-Ing.(FH)
Ringstrasse 115
W-7057 Winnenden(DE)**

(74) Vertreter: **Kessl, Josef et al
c/o Bosch-Siemens Hausgeräte GMBH
Patent-und Vertragswesen Hochstrasse 17
W-8000 München 80(DE)**

(54) Füllstandsanzeige, insbesondere für Geräte zur Getränkeherstellung.

(57) Für Flüssigkeits-Vorratsbehälter ist eine Füllstandsanzeige dadurch realisiert, daß der Behälterinhalt gut sichtbar ist, wenn das Flüssigkeitsniveau im Behälter unter ein bestimmtes Maß abgesunken ist.

Diese Aufgabe wird gemäß der Erfindung dadurch gelöst, daß die Behälterwand (1') ein im Bereich der Schaublende (2 oder 10) gelegenes Prisma (4) aufweist, an dem das durch die Öffnungen (5) in der Schaublende einfallende Licht (7) reflektiert bzw. durch die Flüssigkeit (9) im Behälter (11) absorbiert wird.

Durch die erfinderische Ausbildung des Füllstandsanzeigers wird eine einfache Füllstandsanzeige geschaffen, die ohne zusätzliche mechanische oder elektrische Vorrichtungen auskommt.

Fig.1

Die Erfindung bezieht sich auf eine Füllstandsanzeige für Flüssigkeits-Vorratsbehälter, insbesondere bei Wasser-Vorratsbehälter zur Getränkeaufbereitung, welche einen ganz oder teilweise aus transparentem Material gefertigten Behälter aufweisen, und eine Füllstandsanzeige-Vorrichtung besitzen.

Füllstandsanzeigen für Behälter mit Flüssigkeiten sind vielfach bekannt. Um unmittelbar den Füllstand innerhalb eines Behälters beobachten zu können, ist es naheliegend, dessen Wandung ganz oder teilweise aus durchsichtigem oder zumindest durchscheinendem Material zu gestalten. Je größer der Anteil dieser durchsichtigen oder durchscheinenden Wandungsteile ist, desto größer ist auch der Lichteinfall im derartigen Behälter. Dies kann für den Behälterinhalt insbesondere bei längeren Verweilzeiten sehr nachteilig sein. Deshalb werden in diesen Fällen die durchsichtigen oder durchscheinenden Bereiche möglichst reduziert. Bisweilen werden auch Behälter mit durchsichtigen oder durchscheinenden Wandungen im Gehäuse mit undurchsichtigen Wandungen eingesetzt, um einen Lichteinfall zu verhindern. Durch Öffnen zumindest einer der Seitenwandungen kann der Füllstand gezielt überprüft werden. Es kann auch ein schmales Sichtfenster in der Wandung angeordnet sein, um eine Füllstandsprüfung zu ermöglichen. Diese Maßnahmen laufen dem Wunsch nach jeder Einsetzbarkeit in die Behälter zur Feststellung des Füllstandes zuwider. Auch ist es bekannt, eine sogenannte Niveauanzeige durch ein aus dem Behälter herausragendes transparentes Röhrchen zu bilden, wobei an den Röhrchen abgelesen werden kann, wie weit der Behälter gefüllt ist. Fernerhin sind Kraftaufnehmer, Drucksensoren, Druckschalter bekannt, welche ebenfalls zur Füllstandsanzeige des Behälters genutzt werden. Viele dieser Einrichtungen scheiden indessen für herausnehmbare Wasservorratsbehälter von Getränkeautomaten aus oder sind zumindest schlecht geeignet, jedenfalls aber relativ aufwendig; sie sind meist über Rohrleitungen, Röhrchen oder dgl. mit der Flüssigkeit verbunden und daher später schlecht zu reinigen. Bei einem transparenten Behälter mit einer Lochblende ist es mitunter erforderlich, den Behälter zu beleuchten, damit der Füllstand an der Blende abgelesen werden kann.

Bei Geschirrspülmaschinen ist es bekannt, zur Leeranzeige des Klarsspülers einen transparenten Stab zu verwenden, der in den Behälter eingelassen ist und am unteren Ende einen Kegel besitzt. Bei Sicht auf den transparenten Stab kann festgestellt werden, ob der Klarspülbehälter im Bereich des Kegels noch mit Klarspülmittel versehen ist.

Den bekannten Stand der Technik berücksichtigend, besteht die Aufgabe mit möglichst geringem Aufwand und möglichst störungsunanfällig eine Füllstandsanzeige für Vorratsbehälter bereitzustellen, wobei möglichst wenige Wartungsteile des Behälters bzw. des diesen umgebenden Gehäuses lichtdurchlässig oder lichtdurchscheinend sind.

Eine dieser Aufgabenstellung gerechtwerdende Füllstandsanzeige ist erfindungsgemäß dadurch gekennzeichnet, daß die Behälterwand zumindest in einem Teilbereich ein an den Innenraum des Behälters ausgebildetes optisches Prisma aufweist, in dem das von außen einfallende Licht reflektiert bzw. durch die Flüssigkeit im Behälter absorbiert wird.

Vorzugsweise ist das optische Prisma als integraler Teil der Behälterwandung ausgebildet. Wird das in den Behälterinnenraum ragende optische Prisma von der Flüssigkeit benetzt, ändert sich der Brechungsindex der Grenzschicht, das einfallende Licht wird absorbiert und die Anzeige erscheint dunkel. Befindet sich indessen im Behälter keine Flüssigkeit mehr, so wird das von außen einfallende Licht an der Grenzschicht des Prismas reflektiert, die Sicht auf das Prisma erscheint dem Betrachter hell bzw. leuchtend. Durch die erfinderische Maßnahme wird so eine deutliche Kennzeichnung der Füllstände des Behälters sichtbar gemacht.

Durch eine das Prisma umgebende Schaublende wird das Füllstandsanzeigefeld besonders hervorgehoben. Ein ggf. den Behälter umgebendes Gehäuse ist im Bereich der prismatischen Anzeigevorrichtung des Behälters mit einem Sichtfenster zu versehen, welches ebenfalls das Anzeigefeld hervorhebt. Vorteilhaft ist es auch, wenn die äußere Behälterwand im Bereich des Prismas Vorsprünge aufweist, wobei diese Vorsprünge in Öffnungen der Schaublende oder der den Behälter umgebenden Gehäusewandung ragen. So ist es möglich, daß das einfallende Licht nicht durch die Schaublende abgeschattet wird. Es besteht ferner die Möglichkeit, den Behälter mit einer oder mehreren transparenten Farben zu bedrucken oder ihn selbst aus farbigem, transparentem Material herzustellen. Bei der Materialauswahl ist auf einen ausreichenden Brechungsindex zu achten. Die Herstellung kann vorteilhaft durch Gießen bzw. Spritzgießen, Prägen oder Pressen erfolgen. Bei der Herstellung des Behälters ist darauf zu achten, daß eine gute Entformung möglich ist, d.h. daß das optische Prisma in Entfernungsrichtung ausgerichtet ist. Dabei ist es dienlich, wenn das Prisma bis zum Boden des Behälters ragt, sofern man sich nicht zum Kleben des Prismas entscheiden will.

In den Zeichnungen ist die Erfindung beispielsweise und zum Teil auch schematisch dargestellt. Es zeigen:

Fig. 1
einen Flüssigkeitsbehälter im Schnitt,

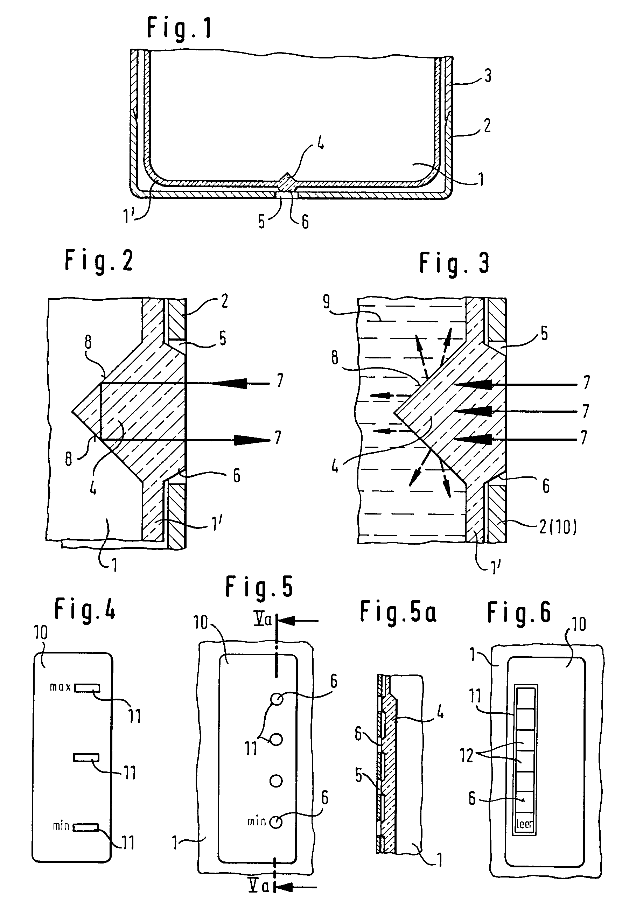

Fig. 2 einen vergrößerten Ausschnitt des Flüssigkeitsbehälters im Bereich des Prismas gemäß der Fig. 1 bei leerem Behälter,

Fig. 3
die Wirkungsweise des Prismas gemäß Fig. 2 bei gefülltem Behälter,

Fig. 4
eine Schaublende,

Fig. 5
ebenfalls eine Schaublende anderer Art am Behälter,

Fig. 5a
einen Schnitt durch die Schaublende gemäß Fig. 5,

Fig. 6
eine andere Form der Schaublende und

Fig. 7 bis Fig. 10
verschiedene Prismenformen.

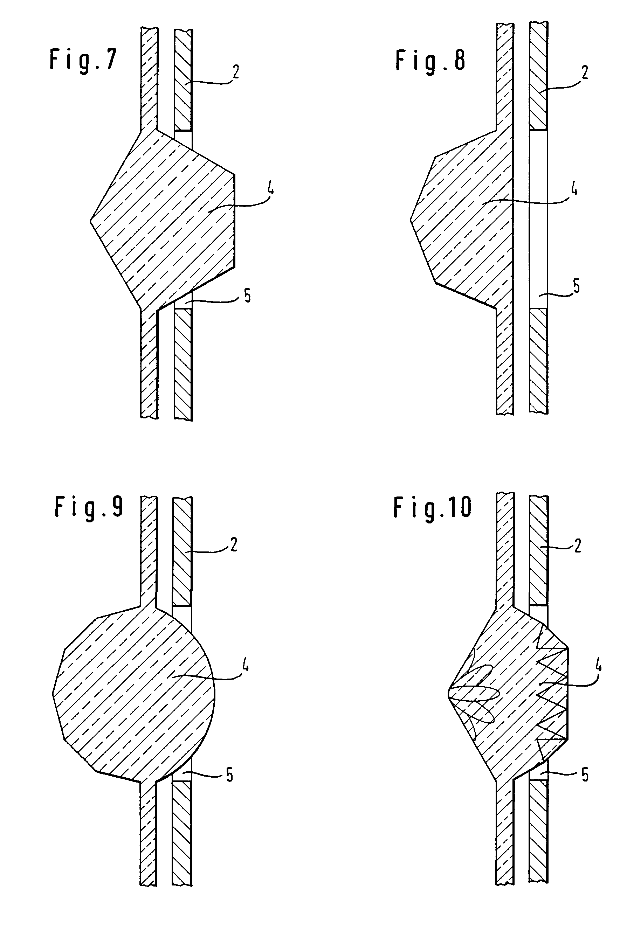

Der in den Fig. 1 bis 3 dargestellte Behälter 1 ist von einer Gehäusewandung 2, 3 umgeben, von denen die Gehäusewandung 2 zur Herausnahme des Behälters 1 abnehmbar ist. Der Behälter 1 dient zur Aufnahme und Bevorratung von Wasser und besitzt in seiner Wandung 1' ein optisches Dreikant-Prisma 4, wobei die Gehäusewandung 2 im Bereich des Prismas 4 und im Füllstandsbereich des Behälters 1 ein Sichtfenster 5 aufweist. Bei dem um den Behälter 1 geschlossenen Gehäuse 2, 3 ragt eine gegenüber dem Prisma 4 nach außen gerichtete wulstartige Erhöhung 6 in der Behälterwandung 1' in das Sichtfenster 5 der Gehäusewandung 2, derart, daß die Erhöhung 6 mit der Außenwand 7 der Gehäusewandung 2 abschließt. Das einfallende Licht 7 wird bei leerem Behälter an den Flanken 8 des Prismas reflektiert, so daß bei leerem Behälter und bei Sicht auf die Erhöhung 6 des Behälters dieser hell erscheint. Obwohl das Prisma 4 hier im Querschnitt ein rechtwinkliges Prisma ist, sei darauf hingewiesen, daß auch andere Formgebungen (Fig. 7 bis Fig. 10), z.B. in Form ähnlich von Diamantschliffen, möglich sind; auch kann das Prisma eine vom Rechteck abweichende Winkelstellung der Flanken 8 aufweisen, z.B. darauf, daß das benachbart vom Betrachter seitlich einfallende Licht zum Betrachter gelenkt wird. Im Gegensatz hierzu wird bei mit Flüssigkeit 9 gefülltem Behälter (vgl. Fig. 3) das Licht an den Flanken 8 des Prismas 4 absorbiert, derart, daß bei Sicht auf das Prisma des Behälters letzteres dunkel erscheint. So ist es möglich, den Füllstand des Behälters anzuzeigen.

Fig. 4 zeigt eine Ansicht auf eine Schaublende 10, die mit Öffnungen 11 versehen ist. Die Schaublende ist vor dem Behälter 1 (Fig. 1) angebracht; sie kann Teil der Gehäusewandung 2 sein. Sie besitzt mehrere Öffnungen 11, in welchen die Erhebungen und Vorsprünge und dgl. 6 des Prismas 4 bzw. des Behhälters 1 hineinragen. Bei Sicht auf die Erhebungen kann somit festgestellt werden, ob und wie weit der Behälter gefüllt ist.

Fig. 5 und 5a zeigt eine andere Schaublende 10 des Behälters 1. Auch hier sind mehrere Öffnungen 11 vorgesehen. Der Behälter trägt hier an der Außenseite mehrere Erhöhungen 6, welche in die Öffnungen 11 der Schaublende 10 hineinragen.

Wie Fig. 6 zeigt, genügt es, in der Schaublende 10 einen einzigen durchgehenden Schlitz bzw. eine Öffnung 11 einzubringen, in der der Vorsprung 6 des Behälters 1 hindurchragt. Auf der Erhöhung sind dann verschiedene Felder 12 aufgedruckt, wobei sodann von außen abgelesen werden kann, ob und wie weit der Behälter gefüllt ist oder nicht.

Es können mehrere Behälter in einem Gehäuse untergebracht sein. Es ist dann zweckmäßig, für die eine Behälterfüllung eine Farbe zu verwenden und für die andere Behälterfüllung eine andere Farbe. Man kann den Behälter selbst aus farbigem transparentem Kunststoff herstellen, aber ihn auch bedrucken. Fernerhin besteht die Möglichkeit, das im vorliegenden Beispiel senkrecht und meist vertikal verlaufende Prisma auch in eine andere Form zu führen, z.B. derart, daß ein Schriftzug entsteht oder ein Symbol, wobei auch hier der Querschnitt des Schriftzuges oder Piktogramms ein Prisma aufweisen.

Es ist nicht erforderlich, daß das Prisma im Querschnitt unbedingt die Form eines Dreiecks aufweist. Es kann an sich jede andere Form besitzen, wobei darauf zu achten ist, daß das einfallende Licht nach außen zum Betrachter abgelenkt wird.

Die erfindungsgemäße Anzeige ist einfach und ohne großen Arbeitsaufwand zu erstellen. Obwohl keine elektrische Energie notwendig ist, ist eine deutliche Anzeige durch den Leuchteffekt gegeben. Die Wandung des Behälters kann leicht gereinigt werden, so daß keine gesundheitlichen Bedenken auftreten. Durch die unterschiedliche Einfärbung oder Symbolik können wichtige Funktionen besser hervorgehoben und der Gebrauchswert des Behälters oder auch des Gerätes verbessert werden.

Obwohl die Erfindung hier für einen Behälter zur Aufnahme und Bevorratung von Wasser, z.B. für ein Gerät zur Getränkebereitung dargestellt wurde, ist es jedoch nicht auf diese Aufgabe allein begrenzt, sondern die Erfindung ist auch bei anderen Behältern zur Flüssigkeitsbevorratung denk- und anwendbar.

**Patentansprüche**

1. Füllstandsanzeige, insbesondere für Geräte zur Getränkeaufbereitung, welche einen, ganz oder teilweise aus transparentem Material gefertigten Behälter aufweisen, bei dem der Füllstand durch die Behälterwandung sichtbar ist und der Behälter vorzugsweise von einer mit Öffnungen versehenen Schaublende, Platte oder dgl. abgedeckt ist, **dadurch gekennzeichnet,** daß die Behälterwandung (1') des Behälters (1) zumindest in einem Teilbereich ein in den Innenraum des Behälters (1) ausgebildetes, optisches Prisma (4) aufweist, an dem das von außen einfallende Licht (7) reflektiert bzw. durch die Flüssigkeit (9) im Behälter (1) absorbiert wird.

2. Füllstandsanzeige nach Anspruch 1, dadurch gekennzeichnet, daß das optische Prisma (4) als Teil der Behälterwandung (1') ausgebildet ist.

3. Füllstandsanzeige nach einem der Ansprüche 1 oder 2, dadurch gekennzeichnet, daß die Behälterwandung (1') lediglich im Bereich des Prismas (4) aus durchsichtigem Material gebildet ist.

4. Füllstandsanzeige nach einem der Ansprüche 1 bis 3, dadurch gekennzeichnet, daß eine den Behälter (1) umgebende Gehäusewandung (2) im Bereich des optischen Prismas (4) in der Behälterwandung (1') ein Sichtfenster (5) aufweist.

5. Füllstandsanzeige nach Ansprüchen 1 und 2, dadurch gekennzeichnet, daß die Behälterwandung (1) Erhöhungen (6) aufweist, wobei diese Erhöhungen in die Öffnungen (5, 11) der Kappe 2 oder der Blende (10) ragen.

5. Füllstandanzeige nach Anspruch 1, dadurch gekennzeichnet, daß das Prisma (4) in Form eines Symbols, Schriftzuges oder eines Piktogramms ausgeführt ist.

6. Füllstandanzeige nach Anspruch 1, dadurch gekennzeichnet, daß das Prisma (4) und/oder die Erhöhungen (6) mit einer oder mehreren transparenten Farben bedruckt, oder selbst aus farbigem, transparenten Material hergestellt sind.

# Fig.1

# Fig.2

# Fig.3

# Fig.4

# Fig.5

# Fig.5a

# Fig.6

Fig.7

2

4

5

Fig.8

2

4

5

Fig.9

2

4

5

Fig.10

2

4

5

6